# EUROPÄISCHE PATENTSCHRIFT

(11) **EP 0 918 063 B1**
(45) Veröffentlichungstag und Bekanntmachung des Hinweises auf die Patenterteilung: **22.05.2002**
(21) Anmeldenummer: 98121823.3
(22) Anmeldetag: 17.11.1998
(51) Int. Cl.: C08G 75/02, C08G 75/18

(54) **Oxidation von Polyarylensulfiden**
Oxidation of polyarylensulfides
Oxidation de polysulfure d'arylène

(30) Priorität: 19.11.1997 DE 19751239
(43) Veröffentlichungstag der Anmeldung: 26.05.1999
(73) Patentinhaber: Ticona GmbH, 65451 Kelsterbach (DE)
(72) Erfinder: Zierer, Dirk Dr., 65719 Hofheim (DE); Scheckenbach, Helmut, 63225 Langen (DE)

(56) Entgegenhaltungen:
- EP-A- 0 827 977
- DE-A- 1 938 806
- GB-A- 1 365 486
- GABLER R ET AL: "NEUE POLYPHENYLENSULFONE REAKTIONEN AN FESTEN POLYMEREN" CHIMIA, Bd. 28, Nr. 9, September 1974, Seiten 567-575, XP000562864

## Beschreibung

Die Erfindung betrifft ein Verfahren zur Herstellung von Polyarylensulfoxid durch Oxidation von Polyarylensulfid.

Polyarylensulfoxide sind technische Spezialpolymere, die insbesondere dort Anwendung finden, wo hohe Anforderungen an den polymeren Werkstoff gestellt werden. So zeichnen sich Polyarylensulfoxide beispielsweise durch hohe Glas-, Schmelz- und Zersetzungstemperaturen aus. Polyarylensulfoxide sind außerdem technisch interessant, weil sie sich als Hochtemperaturtreibmittel zur Herstellung von Kunststoffschäumen verwenden lassen.

Trotz ihrer vielfältigen günstigen Materialeigenschaften ist die Verwendung von Polyarylensulfoxiden noch nicht weit verbreitet, da die Herstellung dieser Polymere technisch aufwendig und Polyarylensulfoxid somit relativ teuer ist.

Ein bekanntes Verfahren zur Herstellung von Polyphenylensulfoxid (PPSO) ist die Umsetzung von in Essigsäureanhydrid aufgeschlämmtem, niedermolekularem Polyphenylensulfid (PPS) mit 70 %-iger Salpetersäure (DE-A-1211399/US-332686). Hierbei wird die Reaktion über einen langen Zeitraum von 24 Stunden bei einer Temperatur zwischen 0 und 5 °C durchgeführt.

In EP-0623639 wird die Oxidation von in einem inerten Medium suspendierten Polyarylensulfiden mit Ozon beschrieben, wobei abhängig von der eingesetzten Menge an Oxidationsmittel die Sulfideinheiten (-S-) teilweise oder vollständig in Sulfoxideinheiten (= Sulfinylgruppen) (-SO-) überführt werden. Die Handhabung des giftigen Ozons ist jedoch technisch aufwendig und das Verfahren somit wenig wirtschaftlich.

Weiter wird in DE-A-1938806 ein Verfahren offenbart, bei dem sulfonylgruppenhaltiges Polyarylensulfid in schwefelsaurem Medium mit Sauerstoff oder einem Sauerstoff übertragenden Mittel, beispielsweise Wasserstoffperoxid (H₂O₂), oxidiert wird. Bei diesem Verfahren werden die vorhandenen Sulfideinheiten direkt in Sulfoneinheiten (= Sulfonylgruppen) (-SO₂-) überführt.

Die Oxidation von in konzentrierter Schwefelsäure suspendiertem PPS mit H₂O₂ wird auch in Chimia 28 (1974) S. 567- 575 (R. Gabler, J. Studinka: "Neue Polyphenylensulfone - Reaktion an festen Polymeren") beschrieben. Hierbei wird offenbart, daß das erhaltene Polyphenylensulfon (PPSO₂) zwar auch Sulfoxideinheiten enthalten kann, was die Vermutung nahelegt, daß die Oxidation vom PPS zum PPSO₂ über die Bildung von Sulfoxideinheiten verläuft. Es wird jedoch gleichzeitig offenbart, daß sich gemäß diesem Verfahren die Stufe des PPSO nicht abfangen läßt.

Auch in GB-1365486 wird die Oxidation von sulfonylhaltigem Polyarylensulfid beschrieben. Hierbei wird das Polyarylensulfidsulfon in Schwefelsäure gelöst und durch Zugabe einer Mischung aus Wasserstoffperoxid und Schwefelsäure oxidiert. Nach diesem Verfahren werden die Sulfideinheiten des Polyarylensulfidsulfons zwar teilweise auch in Sulfoxideinheiten überführt, überwiegend erfolgt jedoch die Umsetzung zu Sulfoneinheiten.

Entsprechend ist aus EP-A-0623641 bekannt, daß sich bei der Oxidation von PPS-Pulver mit Peressigsäure (Essigsäure + H₂O₂) - auch in Gegenwart katalytischer Mengen von Schwefelsäure - die Stufe des PPSO nicht isolieren läßt. Auch nach diesem Verfahren entstehen bereits sehr früh Sulfoneinheiten, so daß das erhaltene Produkt stets ein reines Polyarylensulfon ist oder ein Polyarylensulfoxidsulfoncopolymer, bei dem die Anzahl der Sulfoneinheiten überwiegt.

Aus EP-A-0791027 ist ein Verfahren zur Oxidation von Polyarylenthiothern mit dem Gleichgewichtssystem NO₂/N₂O₄ bekannt, das mit hoher Selektivität zur Bildung von Sulfoxideinheiten führt, wobei aber, wie neuere Untersuchungen zeigen, teilweise Nitrogruppen am Aromaten eingebaut werden.

Die Aufgabe der Erfindung bestand darin, ein wirtschaftliches Verfahren zur Herstellung von Polyarylensulfoxiden zu finden, das die Nachteile der bekannten Verfahren, vor allem lange Reaktionszeiten und geringe Selektivität, überwindet.

Diese Aufgabe wird gelöst durch ein Verfahren, bei dem Polyarylensulfid suspendiert in konzentrierter Dichloressigsäure oder in einer konzentrierten Säure der Formel R-SO₃H, worin R ein Halogenatom, eine OH-Gruppe, ein aliphatischer Rest mit 1 bis 6 C-Atomen, ein halogenierter aliphatischer Rest mit 1 bis 6 C-Atomen oder ein aromatischer Rest mit 6 bis 18 C-Atomen ist, oder der Formel R¹-CR²R³-COOH, worin R¹ ein Halogenatom ist und R² und R³ unabhängig voneinander jeweils ein Halogenatom, ein aliphatischer Rest mit 1 bis 5 C-Atomen oder ein halogenierter aliphatischer Rest mit 1 bis 5 C-Atomen sind, durch Zudosierung einer 30 bis 100 %-igen Wasserstoffperoxidlösung bei intensiver Durchmischung und bei einer Temperatur von -20 bis +45 °C oxidiert wird.

Die molare Menge des zur Reaktion gebrachten Oxidationsmittels sollte in etwa der molaren Menge an Sulfideinheiten im Polyarylensulfid entsprechen, d.h. das Verhältnis der molaren Menge Oxidationsmittel zur molaren Menge Sulfideinheiten sollte bei Zugabe des Oxidationsmittels im Überschuß maximal 1,05:1 und bei Zugabe im Unterschuß minimal 0,98:1 betragen.

Die Zugabe des Oxidationsmittels sollte derart erfolgen, daß von 0,1 bis 2 mol-Äquivalent Oxidationsmittel pro Stunde zudosiert wird, wobei ein mol-Äquivalent die Menge Oxidationsmittel darstellt, die zur Oxidation von einem Mol Sulfideinheiten benötigt wird. Bevorzugt beträgt die Zudosierung 0,25 bis 1 mol-Äquivalent pro Stunde, besonders bevorzugt 0,5 bis 0,7 mol-Äquivalent pro Stunde.

Überraschend wurde gefunden, daß nach dem erfindungsgemäßen Verfahren die Sulfideinheiten des Polyarylensulfids nahezu selektiv, d.h. zu mehr als 90 % in Sulfoxideinheiten überführt werden und zu nur geringem Anteil in Sulfoneinheiten. Außerdem wurde gefunden, daß das so erhaltene Polyarylensulfoxid eine erhöhte Zersetzungstemperatur aufweist.

Polyarylensulfide im Sinne der Erfindung sind lineare oder verzweigte Polymere, die Arylensulfideinheiten enthalten. Bevorzugte Polyarylensulfide sind Polyarylenthioether mit wiederkehrenden Einheiten der Formel

-[(Ar¹)ₙ-X]ₘ-[(Ar²)ᵢ-Y]ⱼ-[(Ar³)ₖ-Z]ₗ-[(Ar⁴)ₒ-W]ₚ- (I)

worin Ar¹, Ar², Ar³, Ar⁴ bzw. W, X, Y und Z unabhängig voneinander gleich oder verschieden sind, die Indizes n, m, i, j, k, l, o und p unabhängig voneinander Null oder ganze Zahlen 1, 2, 3 oder 4 sind, wobei ihre Summe mindestens 2 ist, Ar¹, Ar², Ar³ und Ar⁴ Arylensysteme mit 6 bis 18 C-Atomen sind und W, X, Y und Z zweiwertige Verknüpfungsgruppen darstellen, ausgewählt aus -SO₂-, -S-, -SO-, -CO, -O-, -COO- oder Alkylen- oder Alkylidengruppen mit 1 bis 6 C-Atomen, und mindestens eine der Verknüpfungsgruppen W, X, Y oder Z aus -S- besteht.

Die Arylensysteme Ar¹, Ar², Ar³ und Ar⁴ können wahlweise substituiert oder unsubstituiert sein. Bevorzugte Arylensysteme sind Phenylen, Biphenylen, Naphthylen, Anthracen und Phenanthren. Besonders bevorzugtes Polyarylensulfid ist Polyphenylensulfid, welches u.a. unter den Namen ®Fortron und ®Ryton bekannt ist.

Gemäß dem beanspruchten Verfahren wird das Polyarylensulfid in Dichloressigsäure oder in einer Säure der Formel R-SO₃H bzw. der Formel R¹-CR²R³-COOH suspendiert, wobei
- R ein Halogenatom, eine OH-Gruppe, ein aliphatischer Rest mit 1 bis 6 C-Atomen, beispielsweise Methyl, Ethyl, Propyl, n-Butyl, tert.-Butyl, Pentyl oder Isopentyl, ein halogenierter aliphatischer Rest wie -CF₃, -CCl₃ oder -CHCl₂, oder ein aromatischer Rest mit 6 bis 18 C-Atomen, beispielsweise Phenyl, Tolyl, Biphenyl, Naphthyl, Anthracenyl oder Phenanthrenyl sein kann,
- R¹ ein Halogenatom, vorzugsweise Fluor oder Chlor, ist,
- R² und R³ unabhängig voneinander jeweils ein Halogenatom, bevorzugt Fluor oder Chlor, ein aliphatischer Rest mit 1 bis 5, vorzugsweise 1 bis 3 C-Atomen, z.B. Methyl, Ethyl und Propyl, oder ein halogenierter aliphatischer Rest mit 1 bis 5, vorzugsweise 1 bis 3 C-Atomen, z.B. -CF₃, -CCl₃ und -CHCl₂, sein können. Besonders bevorzugte Säuren sind konzentrierte Schwefelsäure, Methansulfonsäure, Trifluormethansulfonsäure, Trichlormethansulfonsäure, Chlorsulfonsäure, Trifluoressigsäure, Trichloressigsäure und Dichloressigsäure. Die Konzentration dieser Säure beträgt im allgemeinen 75 bis 100 %, bevorzugt 80 bis 96 % und besonders bevorzugt 82,5 bis 90 %.

Zur Oxidation des Polyarylensulfids zum Polyarylensulfoxid wird im allgemeinen als Oxidationsmittel eine 30 bis 100 %-igen Wasserstoffperoxidlösung der Polyarylensulfidsuspension zudosiert. Die Konzentration der Wasserstoffperoxidlösung beträgt bevorzugt 35 bis 85 %, besonders bevorzugt 50 bis 85 %. Wahlweise kann die Oxidation auch mit einer Mischung aus (A) 50 bis 100 %-iger Wasserstoffperoxidlösung und (B) 95 bis 100 %-iger Lösung einer Säure der Formel R-SO₃H oder der Formel R¹-CR²R³-COOH erfolgen, wobei R, R¹, R² und R³ jeweils einer der oben definierten Substituenten sind und das Verhältnis A:B von 10:1 bis zu 1:10 beträgt. Besonders bevorzugt ist in diesem Fall frisch zubereitete Peroxoschwefelsäure, auch Caro'sche Säure genannt, die aus konzentrierter Wasserstoffperoxidlösung und konzentrierter Schwefelsäure hergestellt wird, oder Dichlorperessigsäure.

Wesentlich für das erfindungsgemäße Verfahren ist, daß das zudosierte Oxidationsmittel möglichst schnell und gut in der Polyarylensulfidsuspension verteilt wird und daß die Zudosierung bei einer Temperatur von -20 bis +45 °C, bevorzugt bei 0 bis +25 °C und besonders bevorzugt bei 5 bis 20 °C erfolgt. Die gute und schnelle Verteilung des Oxidationsmittels wird im allgemeinen durch eine starke Durchmischung des Reaktionsgemisches bewirkt. Dieses kann durch allgemein bekannte Verfahren erfolgen, beispielsweise durch Verwendung von leistungsstarken Rührern und Strömungsbrechern etc. Zur Wahrung des vorgegebenen Temperaturbereichs ist es vorteilhaft, sowohl das Oxidationsmittel als auch die Polyarylensulfidsuspension und das Reaktionsgemisch zu kühlen. Insbesondere während der Zudosierung des Oxidationsmittels ist darauf zu achten, daß die Temperatur nicht zu hoch, insbesondere nicht über 45 °C ansteigt.

Nach Ende der Zudosierung wird das Reaktionsgemisch noch 0,5 bis 5 Stunden, bevorzugt 0,5 bis 3 Stunden und besonders bevorzugt 1 bis 2 Stunden lang weiter durchmischt, um eine möglichst vollständige Oxidation der Sulfideinheiten zu erreichen. Die Temperatur wird dabei im allgemeinen im vorgegebenen Bereich gehalten. Vorzugsweise wird das Reaktionsgemisch durch Kühlung auf konstanter Temperatur gehalten.

Zum Aufarbeiten kann das Reaktionsgemisch mit Wasser oder Eiswasser verdünnt und abfiltriert werden, wobei das Polyarylensulfoxid im Filter verbleibt und als Filtrat verdünnte Säure anfällt. Wahlweise kann auch diese verdünnte Säure, beispielsweise aus einem vorangegangenen Ansatz, zum Verdünnen verwendet werden. Durch Variation der Durchmischung des Reaktionsgemisches beim Aufarbeiten kann die Korngröße des erhaltenen Produkts beeinflußt werden, wobei üblicherweise bei besserer Durchmischung und geringerer Viskosität des Ansatzes eine kleinere Korngröße erhalten wird. Üblicherweise werden Korngrößen kleiner gleich 70 µm erreicht, bevorzugt kleiner gleich 50 µm.

Vorteilhaft ist es insgesamt, wenn man bereits zu Beginn der Reaktion ein möglichst feinkörniges Polyarylensulfidpulver verwendet. Die Korngröße des Polyarylensulfids ist dabei im allgemeinen 1 bis 100 µm, bevorzugt 5 bis 75 µm und besonders bevorzugt 5 bis 45 µm.

Nach dem erfindungsgemäßen Verfahren werden im allgemeinen mehr als 90 %, bevorzugt mehr als 95 % der Sulfideinheiten zu Sulfoxideinheiten oxidiert und üblicherweise weniger als 10 %, bevorzugt weniger als 5 % zu Sulfoneinheiten. Der Anteil verbleibender Sulfideinheiten beträgt im allgemeinen kleiner 5 %, bevorzugt kleiner 2 %.

Die charakteristische Zersetzungsstufe des nach dem erfindungsgemäßen Verfahren erhaltenen Polyarylensulfoxids liegt in der Regel im Vergleich zu Produkten erhalten durch Oxidation in Salpetersäure bei um 20 bis 25 °C höherer Temperatur. Für erfindungsgemäß oxidiertes Polyphenylensulfid liegt die Zersetzungsstufe, bestimmt mittels thermogravimetrische Analyse (TGA), durch Aufheizen an Luft bis 500 °C mit 10 K/min durchgeführt, gewöhnlich bei 365 bis 367°C, während in Salpetersäure oxidiertes PPS eine Zersetzungsstufe bei 340 °C aufweist. Durch Differential Scanning Calorimetrie (DSC) unter Stickstoff bestimmt liegt die Zersetzungsstufe erfindungsgemäß bei ca. 380 bis 385 °C, nach Oxidation in Salpetersäure bei ca. 365 bis 370 °C.

Die nach dem erfindungsgemäßen Verfahren hergestellten Polyarylensulfoxide können, abhängig von ihrer jeweiligen Glas- oder Schmelztemperatur, thermoplastisch, durch Schmelz-Preß-Verfahren oder durch Sinterverfahren weiter verarbeitet werden. Bei thermoplastischer Verarbeitung werden Formmassen aus Polyarylensulfoxid durch für Thermoplaste gängige Verfahren wie Spritzguß und Extrusion in Form- und Funktionsteile überführt. Diese Formmassen können auch pulverförmige Füllstoffe wie Kreide, Talk, Ton und Glimmer, faserförmige Verstärkungsmittel wie Glas-, Kohlenstoff-, Metall- oder Polymerfasern, Whiskers sowie übliche Zusatzstoffe und Verarbeitungshilfsmittel wie Antioxidantien, Gleitmittel, Trennmittel und UV-Stabilisatoren enthalten.

Formteile aus thermoplastisch verarbeitbarem Polyarylensulfoxid finden besonders als hochbeanspruchbare Funktionsbauteile, beispielsweise im Flugzeug- oder Automobilbau sowie im chemischen Apparatebau, Verwendung. Durch Sinterverfahren hergestellte Formteile aus Polyarylensulfoxid finden vor allem dort Verwendung, wo eine hohe Temperatur- und Chemikalienbeständigkeit gefordert ist. Polyarylensulfoxide lassen sich auch als Füll- und Verstärkungsstoffe oder als chemisches Hochtemperaturtreibmittel für andere Polymere verwenden.

Für die folgenden Beispiele wurde ein Polyphenylensulfid (PPS, ®Fortron der Ticona GmbH, Frankfurt) mit einer Korngröße von 17 µm verwendet.

### Beispiele 1 - 7 :

Oxidation : m_{PPS} Gramm (= n_{PPS} mol-Äquivalente) Polyphenylensulfid (PPS) wurden in m_{H2SO4} Gramm Schwefelsäure mit einer Konzentration von x_{H2SO4} % suspendiert. Die Suspension wurde auf T_{Start} °C heruntergekühlt.

Dann wurden unter Rühren innerhalb von t_{Dosier} Minuten m_{H2O2} Gramm (= n_{H2O2} mol-Äquivalente) einer x_{H2O2} %igen Wasserstoffperoxidlösung (H₂O₂) zugetropft, wobei die Reaktionstemperatur nicht über T_{Reakt}. °C stieg.
Nachdem das H₂O₂ zugetropft war, wurde der Reaktionsansatz noch t_{Reakt}. Stunden unter Kühlung und t_{Nach} Stunden bei Raumtemperatur gerührt.

Nach Ende der Reaktion waren die Ansätze mehr oder weniger stark viskos.
Das Produkt lag entweder nahezu vollständig gelöst, teilweise gelöst, stark angequollen oder nur angequollen vor (= Konsistenz in Tabelle 1).
Die Farbe der Reaktionsmischung variierte von grünlich transparent über grünlich trübe nach milchig dunkelviolett (= Farbe in Tabelle 1).
Die Schwefelsäure hatte am Ende der Reaktion eine Konzentration von X_{Ende} %.

Aufarbeitung : Das Produkt wurde durch Zugabe von kaltem Wasser (Eiswasser) zum Reaktionsansatz ausgefällt und ca. 30 Minuten mit einem Ultraturrax dispergiert.
Danach wurde das Produkt abfiltriert und mit ca. 10 Liter demineralisiertem Wasser neutral gewaschen. Das im Vakuumtrockenschrank bei 120 °C getrocknete Polymer wurde in einem Mixer zerkleinert, um aggregierte Partikel voneinander zu trennen.

Analyse : Die Analysenergebnisse sind in Tabelle 4 zusammengefaßt.

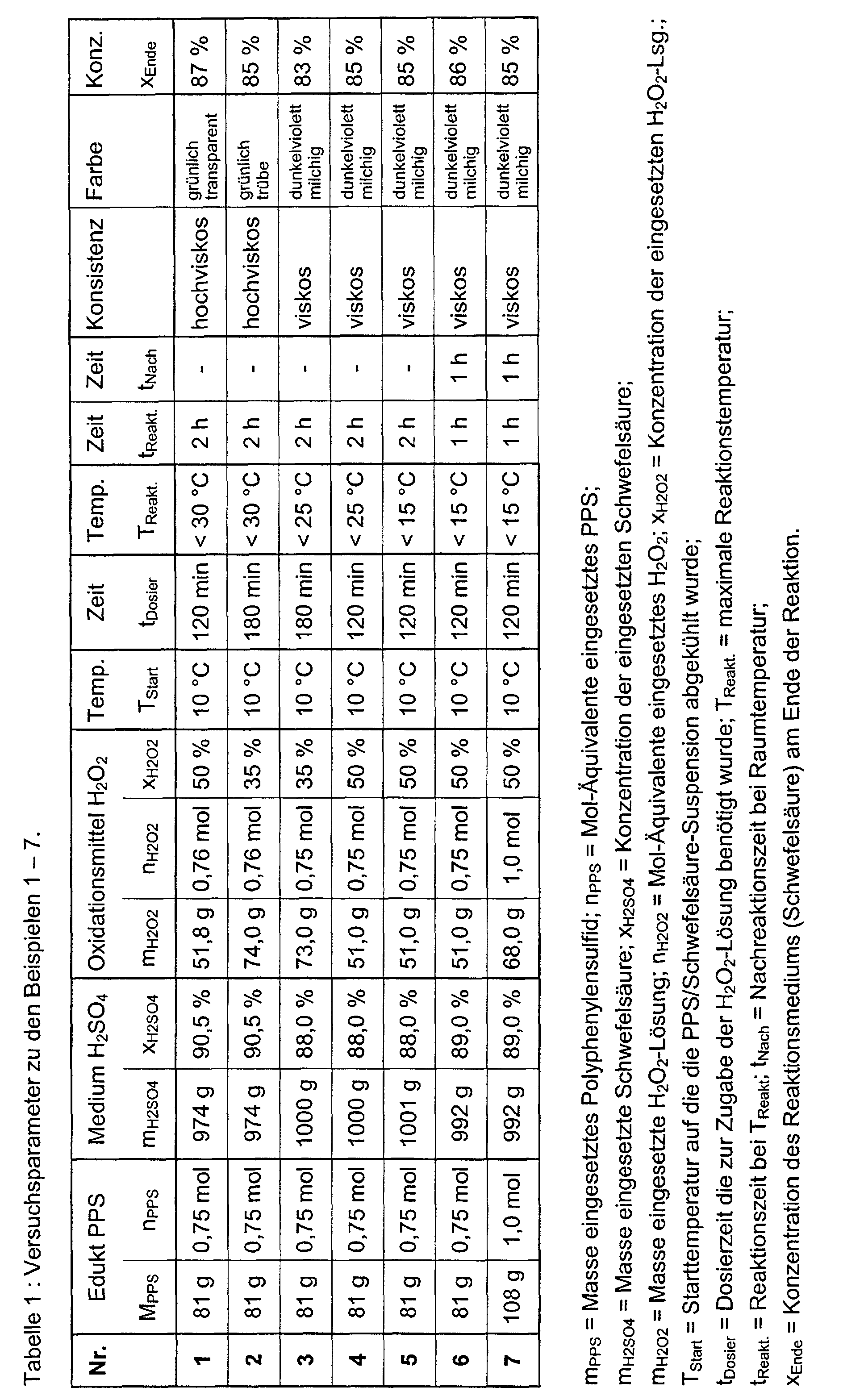

### Beispiele 8 - 12 :

Oxidation : m_{PPS} Gramm (= n_{PPS} mol-Äquivalente) Polyphenylensulfid (PPS) wurden in m_{H2SO4} Gramm Schwefelsäure mit einer Konzentration von x_{H2SO4} % suspendiert. Die Suspension wurde auf T_{Start} °C heruntergekühlt.
Dann wurden unter Rühren innerhalb von t_{Dosier} Minuten m_{Caro} Gramm Caro'sche Säure zugetropft, die frisch aus m'_{H2SO4} Gramm 96 %iger Schwefelsäure und m_{H2O2} Gramm (= n_{H2O2} mol-Äquivalente) einer 85 %igen Wasserstoffperoxidlösung (H₂O₂) hergestellt wurde. Die Reaktionstemperatur stieg dabei nicht über T_{Reakt}. °C. Nachdem die Caro'sche Säure zugetropft war, wurde der Reaktionsansatz noch t_{Reakt}. Stunden unter Kühlung und t_{Nach} Stunden bei Raumtemperatur gerührt.

Nach Ende der Reaktion waren die Ansätze mehr oder weniger stark viskos.
Das Produkt lag teilweise gelöst bzw. mehr oder weniger stark angequollen vor.
Die Farbe der Reaktionsmischung variierte von dunkel-rotbraun über rostrot nach dunkel-rosa (= Farbe in Tabelle 3).
Die Schwefelsäure hatte am Ende der Reaktion eine Konzentration von x_{Ende} %.

Aufarbeitung : Das Produkt wurde durch Zugabe von kaltem Wasser (Eiswasser) zum Reaktionsansatz ausgefällt und ca. 30 Minuten mit einem Ultraturrax dispergiert. Danach wurde das Produkt abfiltriert und mit ca. 10 Liter demineralisiertem Wasser neutral gewaschen. Das im Vakuumtrockenschrank bei 120 °C getrocknete Polymer wurde in einem Mixer zerkleinert, um aggregierte Partikel voneinander zu trennen.

Analyse : Die Analysenergebnisse sind in Tabelle 4 zusammengefaßt.

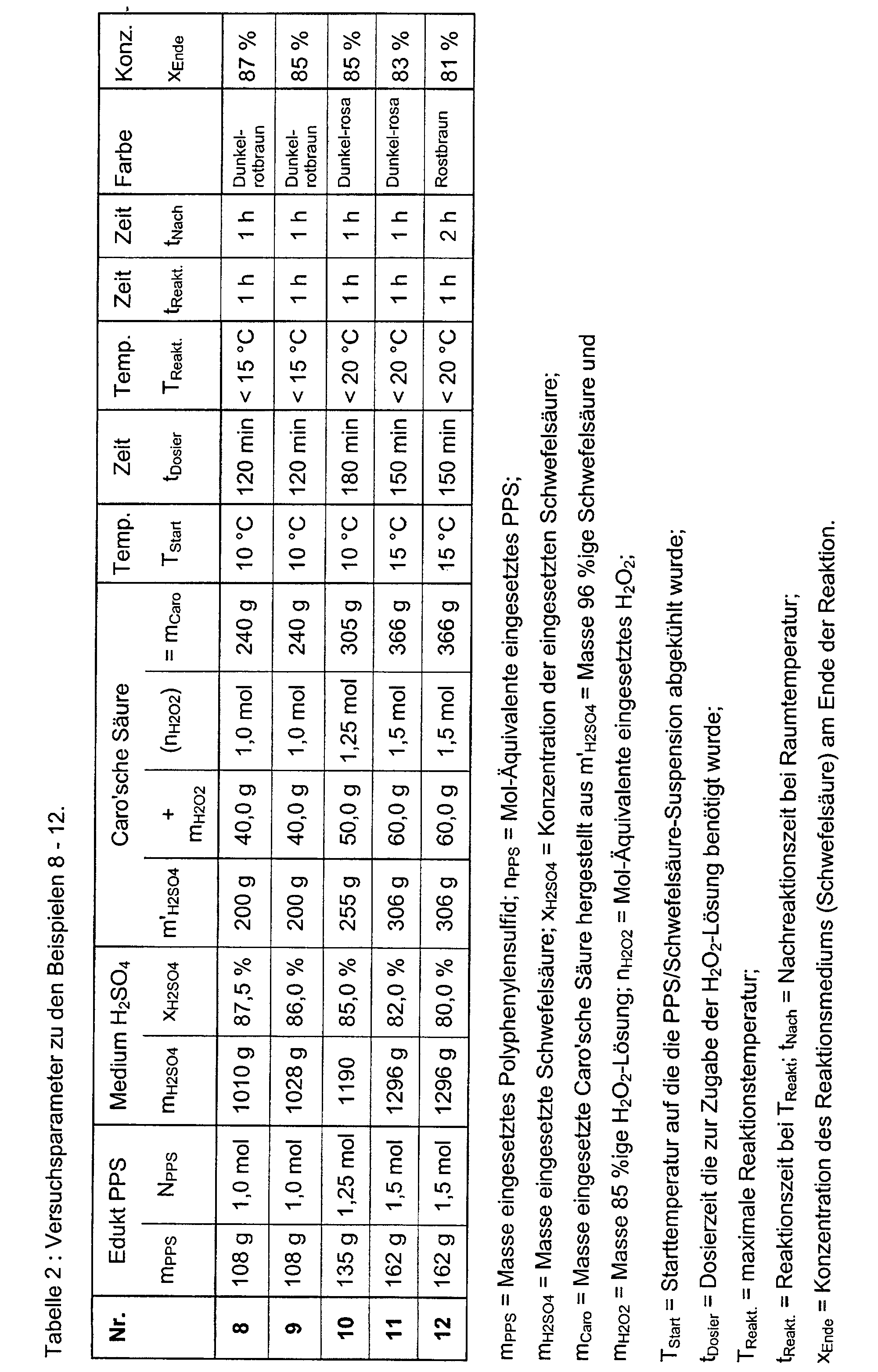

### Beispiele 13 - 16:

Oxidation : m_{PPS} Gramm (= n_{PPS} mol-Äquivalente) Polyphenylensulfid (PPS) wurden in m_{DCE} Gramm Dichloressigsäure (DCE) mit einer Konzentration von x_{DCE} % suspendiert.
Die Suspension wurde auf T_{Start} °C heruntergekühlt.
Dann wurden unter Rühren innerhalb von t_{Dosier} Minuten m_{H2O2} Gramm (= n_{H2O2} mol-Äquivalente) einer x_{H2O2} %igen Wasserstoffperoxidlösung (H₂O₂) zugetropft, wobei die Reaktionstemperatur nicht über T_{Reakt}. °C stieg.
Nachdem das H₂O₂ zugetropft war, wurde der Reaktionsansatz noch t_{Reakt}. Stunden unter Kühlung und t_{Nach} Stunden bei Raumtemperatur gerührt.

Nach Ende der Reaktion waren die Ansätze mehr oder weniger stark viskos.
Das Produkt lag entweder nahezu vollständig gelöst, teilweise gelöst oder nur angequollen vor (= Konsistenz in Tabelle 4).
Die Farbe der Reaktionsmischung variierte von farblos trüb bis milchig weiß (= Farbe in Tabelle 4)
Die Dichloressigsäure hatte am Ende der Reaktion eine Konzentration von x_{Ende} %.

Aufarbeitung : Das Produkt wurde durch Zugabe von heißem Wasser (60 - 70 °C) zum Reaktionsansatz ausgefällt und ca. 30 Minuten mit einem Ultraturrax dispergiert. Danach wurde das Produkt abfiltriert und mit ca. 5 Liter demineralisiertem Wasser neutral gewaschen. Das im Vakuumtrockenschrank bei 120 °C getrocknete Polymer wurde in einem Mixer zerkleinert, um aggregierte Partikel voneinander zu trennen.

Analyse : Die Analysenergebnisse sind in Tabelle 4 zusammengefaßt.

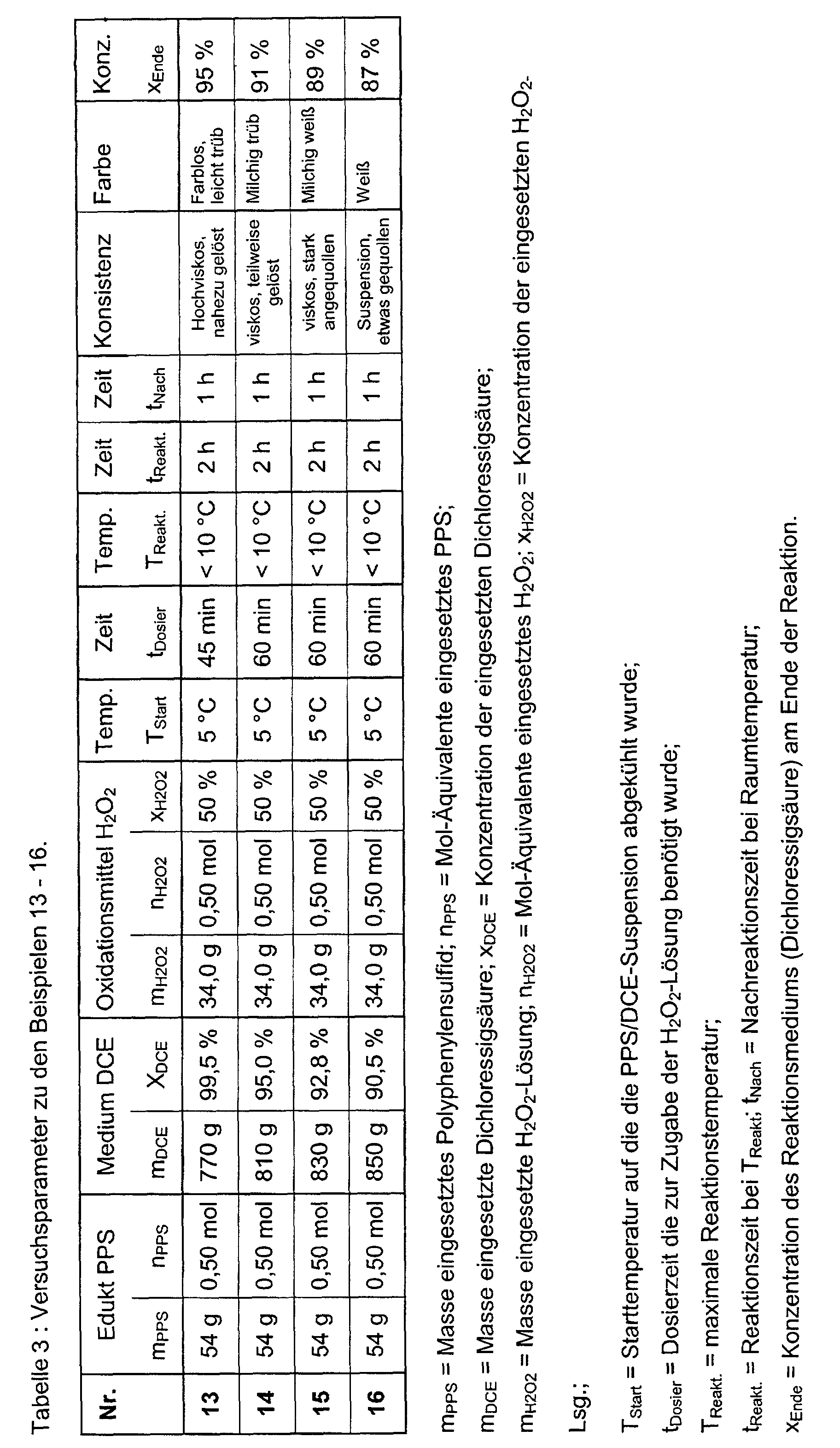

**Tabelle 4 :**

| ¹H NMR-Analyse der Polyarylensulfoxide aus den Beispielen 1 - 16 (Lösungen in Deutero-Dichloressigsäure = D₂-DCE). | | | | |
|---|---|---|---|---|
| Produkt | Sulfideinheiten S in [%] | Sulfoxideinheiten n SO in [%] | Sulfoneinheiten SO₂ in [%] | Oxidationsgrad in [%] |
| Beispiel 1 | 1,3 | 96,1 | 2,6 | 101,3 |
| Beispiel 2 | 1,0 | 95,9 | 3,1 | 102,1 |
| Beispiel 3 | 0,9 | 96,2 | 2,9 | 102,0 |
| Beispiel 4 | 0,8 | 96,5 | 2,7 | 101,9 |
| Beispiel 5 | 1,2 | 96,3 | 2,5 | 101,3 |
| Beispiel 6 | 1,0 | 96,6 | 2,4 | 101,4 |
| Beispiel 7 | 1,1 | 94,7 | 4,2 | 103,1 |
| Beispiel 8 | 1,5 | 96,2 | 2,3 | 100,8 |
| Beispiel 9 | 1,5 | 95,9 | 2,6 | 101,0 |
| Beispiel 10 | 1,0 | 95,4 | 3,6 | 102,6 |
| Beispiel 11 | 1,0 | 94,8 | 4,2 | 103,2 |
| Beispiel 12 | 1,4 | 93,3 | 5,3 | 103,9 |
| Beispiel 13 | 1,2 | 97,9 | 0,9 | 99,7 |
| Beispiel 14 | 1,1 | 96,9 | 2,0 | 100,9 |
| Beispiel 15 | 1,0 | 95,5 | 3,5 | 102,5 |
| Beispiel 16 | 2,5 | 93,2 | 4,3 | 101,8 |
| Oxidationsgrad : reines PPSO = 100 %. | | | | |

## Patentansprüche

1. Verfahren zur Herstellung von Polyarylensulfoxid, wobei Polyarylensulfid suspendiert in konzentrierter Dichloressigsäure oder in einer konzentrierten Säure der Formel R-SO₃H oder der Formel R¹-CR²R³-COOH, worin R ein Halogenatom, eine OH-Gruppe, ein aliphatischer Rest mit 1 bis 6 C-Atomen, ein halogenierter aliphatischer Rest mit 1 bis 6 C-Atomen oder ein aromatischer Rest mit 6 bis 18 C-Atomen ist, R¹ ein Halogenatom ist und R² und R³ unabhängig voneinander jeweils ein Halogenatom, ein aliphatischer Rest mit 1 bis 5 C-Atomen oder ein halogenierter aliphatischer Rest mit 1 bis 5 C-Atomen sind, durch Zudosierung von 30 bis 100 %iger Wasserstoffperoxidlösung bei intensiver Durchmischung und bei einer Temperatur von -20 bis +45 °C oxidiert wird, **dadurch gekennzeichnet dass** das Verhältnis der molaren Menge an Wasserstoffperoxid zur molaren Menge Sulfideinheiten bei Zugabe des Oxidationsmittels im Überschuss maximal 1,05:1 und bei Zugabe im Unterschuss minimal 0,98:1 beträgt und die Zudosierung der Wasserstoffperoxidlösung 0,1 bis 2 mol-Äquivalent pro Stunde beträgt.

2. Verfahren nach Anspruch 1 oder 2, **dadurch gekennzeichnet, daß** eine Säure der Formel R-SO₃H in Form von konzentrierter Schwefelsäure, Methansulfonsäure, Trifluormethansulfonsäure, Trichlormethansulfonsäure oder Chlorsulfonsäure verwendet wird.

3. Verfahren nach Anspruch 1 oder 2, **dadurch gekennzeichnet, daß** eine Säure der Formel R¹-CR²R³-COOH in Form von konzentrierter Trifluoressigsäure, Trichloressigsäure oder Dichloressigsäure verwendet wird.

4. Verfahren nach einem der Ansprüche 1 bis 4, **dadurch gekennzeichnet, daß** die Konzentration der Säure der Formel R-SO₃H bzw. der Formel R¹-CR²R³-COOH 75 bis 100 % beträgt.

5. Verfahren nach einem der Ansprüche 1 bis 5, **dadurch gekennzeichnet, daß** als Polyarylensulfid ein linearer oder verzweigter Polyarylenthioether mit wiederkehrenden Einheiten der Formel
-[(Ar¹)ₙ-X]ₘ-[(Ar²)ᵢ-Y]ⱼ-[(Ar³)ₖ-Z]ₗ-[(Ar⁴)ₒ-W]ₚ- (I)
eingesetzt wird, worin Ar¹, Ar², Ar³, Ar⁴ bzw. W, X, Y und Z unabhängig voneinander gleich oder verschieden sind, die Indizes n, m, i, j, k, I, o und p unabhängig voneinander Null oder ganze Zahlen 1, 2, 3 oder 4 sind, wobei ihre Summe mindestens 2 ist, Ar¹, Ar², Ar³ und Ar⁴ Arylensysteme mit 6 bis 18 C-Atomen sind und W, X, Y und Z zweiwertige Verknüpfungsgruppen darstellen, ausgewählt aus -SO₂-, -S-, -SO-, -CO-, -O-, -COO- oder Alkylen- oder Alkylidengruppen mit 1 bis 6 C-Atomen, und mindestens eine der Verknüpfungsgruppen W, X, Y oder Z aus -Sbesteht.

6. Verfahren nach einem der Ansprüche 1 bis 6, **dadurch gekennzeichnet, daß** als Polyarylensulfid Polyphenylensulfid eingesetzt wird.

7. Verfahren nach einem der Ansprüche 1 bis 7, **dadurch gekennzeichnet, daß** die Korngröße des Polyarylensulfids 1 bis 100 µm beträgt.

8. Verfahren nach einem der Ansprüche 1 bis 9, **dadurch gekennzeichnet, daß** die Reaktionsmischung nach Zudosierung der Wasserstoffperoxidlösung über einen Zeitraum von 0,5 bis 5 Stunden bei einer Temperatur von -20 bis +45 °C weiter durchmischt wird.

9. Verfahren nach einem der Ansprüche 1 bis 10, **dadurch gekennzeichnet, daß** zur Oxidation des Polyarylensulfids anstelle der Wasserstoffperoxidlösung eine Mischung bestehend aus (A) einer 50 bis 100 %igen Wasserstoffperoxidlösung und (B) einer 95 bis 100 %igen Säure der Formel R-SO₃H bzw. der Formel R¹-CR²R³-COOH, worin R ein Halogenatom, eine OH-Gruppe, ein aliphatischer Rest mit 1 bis 6 C-Atomen, ein halogenierter aliphatischer Rest mit 1 bis 6 C-Atomen oder ein aromatischer Rest mit 6 bis 18 C-Atomen ist, R¹ ein Halogenatom ist und R² und R³ unabhängig voneinander jeweils ein Halogenatom, ein aliphatischer Rest mit 1 bis 5 C-Atomen oder ein halogenierter aliphatischer Rest mit 1 bis 5 C-Atomen sind, zudosiert wird, wobei das Verhältnis A:B von 10:1 bis zu 1:10 beträgt.

## Claims

1. A process for the preparation of polyarylene sulfoxide, in which polyarylene sulfide, suspended in concentrated dichloroacetic acid or in a concentrated acid of the formula R-SO₃H or of the formula R¹-CR²R³-COOH, in which R is a halogen atom, an OH group, an aliphatic radical having 1 to 6 C atoms, a halogenated aliphatic radical having 1 to 6 C atoms or an aromatic radical having 6 to 18 C atoms, R¹ is a halogen atom and R² and R³, independently of one another, are each a halogen atom, an aliphatic radical having 1 to 5 C atoms or a halogenated aliphatic radical having 1 to 5 C atoms, is oxidized by metering in a 30 to 100% strength hydrogen peroxide solution with thorough mixing and at a temperature of from -20 to +45°C, wherein the ratio of the molar amount of hydrogen peroxide to the molar amount of sulfide units is not more than 1.05:1 when then oxidizing agent is added in excess and not less than 0.98:1 - when it is added in less than the stoichiometric amount, and the metering of the hydrogen peroxide solution is from 0.1 to 2 mole equivalents per hour

2. The process as claimed in claim 1, wherein an acid of the formula R-SO₃H in the form of concentrated sulfuric acid, methanesulfonic acid, trifluoromethanesulfonic acid, trichloromethane-sulfonic acid or chlorosulfonic acid is used.

3. The process as claimed in claim 1 or 2, wherein an acid of the formula R¹-CR²R³-COOH in the form of concentrated trifluoroacetic acid, trichloroacetic acid or dichloroacetic acid is used.

4. The process as claimed in any of claims 1 to 3, wherein the concentration of the acid of the formula R-SO₃H or of the formula R¹-CR²R³-COOH is 75 to 100%.

5. The process as claimed in any of claims 1 to 4, wherein the polyarylene sulfide used is linear or branched polyarylene thioether having repeating units of the formula
-[(Ar¹)ₙ-X]ₘ-[(Ar²)ᵢ-Y]ⱼ-[(Ar³)ₖ-Z]ₗ-[(Ar⁴)ₒ-W]ₚ- (I)
in which Ar¹, Ar², Ar³, Ar⁴ and W, X, Y and Z, independently of one another, are identical or different, the indices n, m, I, j, k, l, o and p, independently of one another, are zero or integers 1, 2, 3 or 4, their sum being at least 2, Ar¹, Ar², Ar³ and Ar⁴ are arylene systems having 6 to 18 C atoms and W, X, Y and Z are divalent linking groups selected from -SO₂-, -S-, -SO-, -CO-, -O-, -COO- or alkylene or alkylidene groups having 1 to 6 C atoms, and at least one of the linking groups W, X, Y or Z comprises -S-.

6. The process as claimed in any of claims 1 to 5, wherein the polyarylene sulfide used is polyphenylene sulfide.

7. The process as claimed in any of claims 1 to 6, wherein the particle size of the polyarylene sulfide is from 1 to 100 µm.

8. The process as claimed in any of claims 1 to 7, wherein, after the hydrogen peroxide solution has been metered in, the reaction mixture is further mixed thoroughly for a period of from 0.5 to 5 hours at a temperature of from -20 to +45°C.

9. The process as claimed in any of claims 1 to 8, wherein, instead of the hydrogen peroxide solution, a mixture comprising (A) a 50 to 100% strength hydrogen peroxide solution and (B) a 95 to 100% strength acid of the formula R-SO₃H or of the formula R¹-CR²R³-COOH, in which R is a halogen atom, an OH group, an aliphatic radical having 1 to 6 C atoms, a halogenated aliphatic radical having 1 to 6 C atoms or an aromatic radical having 6 to 18 C atoms, R¹ is a halogen atom and R² and R³, independently of one another, are each a halogen atom, an aliphatic radical having 1 to 5 C atoms or a halogenated aliphatic radical having 1 to 5 C atoms, is metered in for oxidizing the polyarylene sulfide, the ratio A:B being from 10:1 to 1:10.

## Revendications

1. Procédé pour la préparation d'un polyarylènesulfoxyde, dans lequel un poly(sulfure d'arylène), en suspension dans de l'acide dichloracétique concentré ou dans un acide concentré de formule R-SO₃H ou de formule R¹-CR²R³-COOH, où R représente un atome d'halogène, un groupe OH, un radical aliphatique ayant de 1 à 6 atomes de carbone, un radical aliphatique halogéné ayant de 1 à 6 atomes de carbone ou un radical aromatique ayant de 6 à 18 atomes de carbone, R¹ représente un atome d'halogène et R² et R³ représentent chacun, indépendamment l'un de l'autre, un atome d'halogène, un radical aliphatique ayant de 1 à 5 atomes de carbone ou un radical aliphatique halogéné ayant de 1 à 5 atomes de carbone, est oxydé par addition réglée d'une solution de peroxyde d'hydrogène à 30-100 %, sous intense homogénéisation et à une température de -20 à +45°C, **caractérisé en ce que** le rapport de la quantité molaire de peroxyde d'hydrogène à la quantité molaire d'unités sulfure, dans le cas d'addition de l'oxydant en excès, est au maximum de 1,05:1 et, dans le cas de d'addition en défaut, est au minimum de 0,98:1, et l'addition réglée de la solution de peroxyde d'hydrogène va de 0,1 à 2 équivalents molaires par heure.

2. Procédé selon la revendication 1, **caractérisé en ce qu'**on utilise un acide de formule R-SO₃H sous forme d'acide sulfurique, méthanesulfonique, trifluoro-méthanesulfonique, trichlorométhanesulfonique ou chlorosulfonique concentré.

3. Procédé selon la revendication 1 ou 2, **caractérisé en ce qu'**on utilise un acide de formule R¹-CR²R³-COOH sous forme d'acide trifluoroacétique, trichloracétique ou dichloracétique concentré.

4. Procédé selon l'une quelconque des revendications 1 à 3, **caractérisé en ce que** la concentration de l'acide de formule R-SO₃H ou de formule R¹-CR²R³-COOH va de 75 à 100 %.

5. Procédé selon l'une quelconque des revendications 1 à 4, **caractérisé en ce qu'**on utilise en tant que poly(sulfure d'arylène) un polyarylènethioéther linéaire ou ramifié, comportant des motifs répétitifs de formule
-[(Ar¹)ₙ-X]ₘ-[(Ar²)ᵢ-Y]ⱼ-[(Ar³)ₖ-Z]ₗ-[(Ar⁴)ₒ-W]ₚ- (I)
dans laquelle Ar¹, Ar², Ar³, Ar⁴ et, respectivement, W, X, Y et Z, indépendamment les uns des autres, sont identiques ou différents, les indices n, m, i, j, k, 1, o et p représentent, indépendamment les uns des autres, zéro ou les nombres entiers 1, 2, 3 ou 4, leur somme étant au moins 2, Ar¹, Ar², Ar³ et Ar⁴ sont des systèmes arylène ayant de 6 à 18 atomes de carbone et W, X, Y et Z représentent des groupes de liaison divalents choisis parmi -SO₂-, -S-, -SO-, -CO-, -O-, -COO- ou des groupes alkylène ou alkylidène ayant de 1 à 6 atomes de carbone, et au moins un des groupes de liaison W, X, Y et Z consiste en -S-.

6. Procédé selon l'une quelconque des revendications 1 à 5, **caractérisé en ce qu'**on utilise en tant que poly(sulfure d'arylène) du poly(sulfure de phénylène).

7. Procédé selon l'une quelconque des revendications 1 à 6, **caractérisé en ce que** la taille de particule du poly(sulfure d'arylène) va de 1 à 100 µm.

8. Procédé selon l'une quelconque des revendications 1 à 7, **caractérisé en ce qu'**après l'addition réglée de la solution de peroxyde d'hydrogène, on homogénéise encore le mélange réactionnel pendant une durée de 0,5 à 5 heures, à une température de -20 à +45°C.

9. Procédé selon l'une quelconque des revendications 1 à 8, **caractérisé en ce que** pour l'oxydation de poly(sulfure d'arylène) on ajoute de façon réglée, au lieu de la solution de peroxyde d'hydrogène, un mélange constitué de (A) une solution de peroxyde d'hydrogène à 50-100 % et (B) un acide à 95-100 %, de formule R-SO₃H ou de formule R¹-CR²R³-COOH, où R représente un atome d'halogène, un groupe OH, un radical aliphatique ayant de 1 à 6 atomes de carbone, un radical aliphatique halogéné ayant de 1 à 6 atomes de carbone ou un radical aromatique ayant de 6 à 18 atomes de carbone, R¹ représente un atome d'halogène et R² et R³ représentent chacun, indépendamment l'un de l'autre, un atome d'halogène, un radical aliphatique ayant de 1 à 5 atomes de carbone ou un radical aliphatique halogéné ayant de 1 à 5 atomes de carbone, le rapport A:B allant de 10:1 à 1:10.
